# EUROPÄISCHE PATENTSCHRIFT

(11) **EP 2 706 002 B1**
(45) Veröffentlichungstag und Bekanntmachung des Hinweises auf die Patenterteilung: **15.07.2020**
(21) Anmeldenummer: 13004372.2
(22) Anmeldetag: 06.09.2013
(51) Int. Cl.: B62K 25/28, B62M 6/55

(54) **FAHRRAD MIT ELEKTRISCHEM HILFSMOTOR**
ELECTRICALLY ASSISTED BICYCLE
BICYCLETTE À ASSISTANCE ÉLECTRIQUE

(30) Priorität: 06.09.2012 DE 102012017647
(43) Veröffentlichungstag der Anmeldung: 12.03.2014
(73) Patentinhaber: Winora-Staiger GmbH, 97526 Sennfeld (DE)
(72) Erfinder: Beutner, Ingo, 97737 Gemünden (DE)
(74) Vertreter: Weigel, Matthias

(56) Entgegenhaltungen:
- EP-A1- 0 645 300
- EP-A2- 1 564 128
- WO-A1-00/43259
- DE-A1- 19 726 067
- DE-C- 128 234
- FR-A1- 2 766 452

## Beschreibung

Die Erfindung betrifft ein Fahrrad, insbesondere Mountainbike, gemäß dem Oberbegriff nach Anspruch 1.

Seit geraumer Zeit werden Fahrräder mit leistungsstarken elektrischen Antrieben ausgestattet, die den Fahrradbenutzer beim Fahren unterstützen. Hierbei wird generell zwischen zwei Antriebsarten unterschieden. Bei einer Antriebsart ist der elektrische Antrieb unmittelbar in die Nabe des Vorder- oder Hinterrades integriert. Bei einer alternativen Antriebsart wird das Tretlager des Fahrrades in den elektrischen Antrieb integriert und der elektrische Antrieb im Bereich des Tretlagers am Hauptrahmen befestigt.

Bei letzterer Lösung, bei der der elektrische Antrieb am Hauptrahmen befestigt ist, ist die Integration des elektrischen Antriebes in ein Fahrrad mit starrem Hinterbau für das Hinterrad vergleichsweise einfach. Ist das Fahrrad dagegen mit einem gefederten Hinterbau für das Hinterrad ausgestattet, kann die Bewegung des Hinterbaus während des Ein- und Ausfederns in Abhängigkeit von der Bewegungsbahn, entlang der sich die Nabe des Hinterrades bewegt, sowohl das Antriebsverhalten des elektrischen Antriebes als auch das Tretverhalten des Benutzers beeinflussen.

So wird der gefederte Hinterbau üblicherweise, wie z.B. aus der DE 128 234 bekannt, so am Hauptrahmen angelenkt, dass sich die Nabe des Hinterrades während des Ein- und Ausfederns entlang einer bogenförmig verlaufenden Bahn bewegt, wobei sich der Verlauf der Bahn durch die Art der Anlenkung des Hinterbaus an den Hauptrahmen, also die Kinematik des Hinterbaus ergibt. Üblicherweise schwenkt der Hinterbau gerade nicht in einer rotatorischen Bewegung um die Welle des Tretlagers als Drehachse. Vielmehr weist die Bahn, entlang der sich das Hinterrad beim Ein- und Ausfedern bewegt, eine Bogenform oder auch eine S-Form mit einem sich bewegenden virtuellen Drehpunkt auf.

Aufgrund der vorgegebenen Bahn kommt es je nach Hinterbautyp insbesondere beim Ein- und Ausfedern zu einer Veränderung des Abstandes zwischen der Drehachse des Antriebsritzels und der Drehachse des Abtriebsritzels. Da das Abtriebsritzel am Hinterrad in Zugrichtung sperren muss, führt die Vergrößerung des Abstandes zwischen den beiden Drehachsen zu einer Kettenrückstellbewegung, also zu einer entgegen der Laufrichtung der Kette wirkenden Rückstellbewegung, die zu einem sogenannten Pedalrückschlag führt, also einer entgegen der Tretrichtung des Pedals wirkenden Rückstellbewegung des Pedals.

Aufgrund der Tatsache, dass der Außendurchmesser des Antriebsritzels bei den derzeit verwendeten elektrischen Tretlagerantrieben vergleichsweise groß ist, üblich sind 38 Zähne, bewirkt die Kettenrückstellbewegung allenfalls einen zu vernachlässigenden Pedalrückschlag, insbesondere, wenn ein Abriebsritzel mit kleiner Zähnezahl mit der Kette im Eingriff steht.

So offenbart die WO 00/43259 A1 ein Fahrrad mit einem elektrischen Antrieb und einem gefedertem Hinterbau. Der elektrische Antrieb ist mit einem herkömmlichen Antriebsritzel großen Durchmessers versehen.

Seit geraumer Zeit wird nun angedacht, elektrische Tretlagerantriebe zu verwenden, bei denen Antriebsritzel mit deutlich geringerer Zähnezahl, angedacht sind weniger als 21 Zähne, zum Einsatz kommen sollen. Grund hierfür ist, dass die elektrischen Antriebe möglichst kompakt aufgebaut sein sollen, um den Einbau zu erleichtern und Gewicht zu sparen, gleichzeitig jedoch ein ausreichend hohes Drehmoment für den Antrieb bereitstellen muss. Um dies zu erreichen, wird seit kurzem ein elektrischer Tretlagerantrieb angeboten, bei dem das notwendige Drehmoment bereitgestellt wird, in dem ein vergleichsweise kleines Antriebsritzel mit hoher Drehzahl angetrieben wird.

Diese Art des elektrischen Antriebes ist bei Fahrrädern mit starrer Hinterachse problemlos einsatzsetzbar. Bei Fahrrädern mit gefedertem Hinterbau kann nach Art des Hinterbaus das kleine Ritzel im Zusammenwirken mit der Bewegung, die das Hinterrad beim Ein- und Ausfedern vollzieht und deren Verlauf durch die Kinematik des Hinterbaus in Form der Raderhebungskurve vorgegeben ist, dagegen zu massiven Problemen hinsichtlich des Pedalrückschlages führen. Wie Auswertungen gezeigt haben, kann es durch die Kombination aus Sicht der Pedalrückschlages ungünstiger Raderhebungskurve und ungünstigem Übersetzungsverhältnis zwischen dem Antriebsritzel des elektrischen Antriebes und dem üblicherweise frei wählbaren Abtriebsritzel des Hinterrades zu Pedalrückschlägen kommen, bei dem die Kurbelarme bzw. Pedalkurbeln des Tretlagers beim Ein- und Ausfedern um einen Winkel von bis zu 30° entgegen der Drehrichtung verstellt werden. So bestehen hinsichtlich des Pedalrückschlages zwar kaum Probleme, bei Raderhebungskurven, die nach vorne-oben gerichtet sind. Anders stellt sich die Sache dagegen dar, wenn die Raderhebungskurve nach hinten-oben gerichtet ist. Diese nach oben hinten gerichtete Bewegung führt zu einer Änderung des Abstandes zwischen der Hinterradnabe und dem Antriebsritzel. Wenn diese Bewegung darüber hinaus bei einer Übersetzung erfolgt, bei der das Antriebsritzel des Tretlagermotors einen verglichen mit dem aktuell im Eingriff stehenden Abtriebsritzel des Hinterrades einen deutlich geringeren Durchmesser aufweist, wird der Pedalrückschlag entsprechend verstärkt.

Ausgehend von diesem Stand der Technik ist es Aufgabe der Erfindung, ein Fahrrad mit elektrischem Antrieb anzubieten, bei dem die Kettenrückstellbewegung gezielt soweit vermindert werden kann, dass selbst die Verwendung von elektrischen Antrieben mit kleinen Antriebsritzeln problemlos möglich ist.

Erfindungsgemäß wird diese Aufgabe durch ein Fahrrad mit den Merkmalen nach Anspruch 1 gelöst.

Ein wesentlicher Gedanke der Erfindung besteht darin, den oberen Kettenabschnitt der Kette, der zur Drehmomentübertragung zwischen dem Antriebsritzel und dem Abtriebsritzel des Hinterrades entsprechend der gewählten Übersetzung mit diesen im Eingriff steht, durch eine Kettenumlenkung abzustützen. Die Kettenumlenkung ist dabei so bezüglich des Antriebsritzel angeordnet, dass die Kettenumlenkung in jeder Stellung des Hinterbaus, also auch wenn das Hinterrad vollständig eingefedert ist, den oberen Abschnitt der Kette abstützt.

Bei herkömmlichen Fahrrädern mit elektrischem Antrieb im Bereich des Tretlagers bildet das Glied der Kette, das in Antriebsrichtung der Kette als letztes Glied mit dem Antriebsritzel in Eingriff steht, den Punkt, um den der obere Kettenabschnitt bei einem vollständigen Einfedern des Hinterbaus dreht, während der Hinterbau sich entlang einer vorbestimmten Bewegungsbahn bewegt. Die Bewegungsbahn des Hinterbaus und damit des mit der Kette beim Einfedern aktuell in Eingriff stehenden Abtriebsritzel des Hinterrades hängt dabei unmittelbar von der Kinematik des Hinterbaus ab.

Erfindungsgemäß wird nun vorgeschlagen, die Bewegung des Hinterbaus von der Position der Kette am Antriebsritzel zu entkoppeln, so dass erstmals ein elektrischer Antrieb verwendet werden kann, dessen Antriebsritzel eine Zähnezahl aufweist, die kleiner oder gleich 20 ist. Zu diesem Zweck dient die Kettenumlenkung, die nun ersatzweise den Punkt definiert, um den der mit dem Abtriebsritzel in Eingriff stehende obere Kettenabschnitt schwenkt. Dadurch wird erreicht, dass bei einem Einfedern des Hinterbaus die Kettenrückstellung nicht mehr unmittelbar auf das Antriebsritzel einwirkt.

Die Position der Kettenumlenkung wird nun so gewählt, dass der Punkt, an dem der obere Kettenabschnitt von der Kettenumlenkung abgestützt ist, in einem Bereich angeordnet ist, der zumindest benachbart zu dem tatsächlichen Drehpunkt angeordnet ist, um den sich der Hinterbau tatsächlich dreht. Hierdurch wird erreicht, dass der Abstand zwischen dem Punkt, an dem der obere Kettenabschnitt von der Kettenumlenkung abgestützt ist, und dem Punkt, an dem der obere Kettenabschnitt mit dem Abtriebsritzel in Eingriff steht, bei der Bewegung des Hinterrades während des Ein- und Ausfederns zumindest annähernd unverändert bleibt oder sich in einem beschränktem Maß verändert. Die Abstandsänderung wird durch entsprechendes Anordnen der Kettenumlenkung so beschränkt, dass die Kurbelarme der Tretlagers beim Ein- oder Ausfedern des Hinterrades um einen maximalzulässigen Winkel, der in einem Bereich von maximal ±20° liegt, aus der nichteingefederten Position verstellt werden. In diesem Zusammenhang ist zu bemerken, dass sowohl ein negatives, also entgegen der Tretrichtung wirkendes Verstellen des Antriebsritzels und damit der Kurbelarme ebenso möglich ist, wie ein gezieltes positives Verstellen des Antriebsritzels und damit der Kurbelarme in Tretrichtung, wie durch das ±-Symbol definiert ist. Der Winkel ergibt sich dabei ausgehend von einer Nullstellung, in der sich das Hinterrad in seiner nichteingefederten Position während des Fahrens befindet.

Ferner ist auch zu bemerken, dass sich während des Ein- und Ausfederns des Hinterrades zumindest der Punkt, um den der obere Kettenabschnitt beim Ein- und Ausfedern schwenkt, entlang der Kettenumlenkung gegebenenfalls verlagert. Gegebenenfalls verlagert sich auch der Punkt, an dem der obere Kettenabschnitt mit dem Abtriebsritzel in Eingriff steht. Entscheidend ist, dass sich der Abstand zwischen diesen gegebenenfalls wandernden Punkten nur soweit ändert, dass die Kurbelarme maximal um den zulässigen Winkel verstellt werden.

Je nach Art und Konstruktion des Hinterbaus kann sich der Drehpunkt seinerseits auch entlang einer vorgegebenen Bahn verlagern, beispielsweise wenn die Bahn, entlang der sich die Nabe des Hinterrades während des Ein- und Ausfedern bewegt, einen S-förmigen Verlauf zeigt. In einem derartigen Fall wird die Kettenumlenkung so bezüglich des Antriebsritzels angeordnet, dass der Einfluss der Kettenrückstellbewegung minimiert ist. Gegebenenfalls kann die Kettenumlenkung auch so bezüglich der Antriebsritzels und des Hinterbaus angeordnet werden, dass beispielsweise in Fällen, in denen ein begrenzter Pedalrückschlag sogar erwünscht ist, so bei Bergauffahrten, bei denen die Kette über ein Abtriebsritzel mit möglichst großem Durchmesser geführt ist, ein Pedalrückschlag auftritt, während bei Bergabfahrten, der Pedalrückschlag vermieden wird.

Weitere Vorteile und vorteilhafte Weiterbildungen ergeben sich aus der nachfolgenden Beschreibung sowie den Unteransprüchen.

Der maximal zulässige Winkel liegt vorzugsweise in einem Bereich von ± 15°, besonders bevorzugt bei maximal ±10°. Wie eingangs bereits erläutert, kann sowohl ein negatives, also entgegen der Tretrichtung wirkendes Verstellen des Antriebsritzels und damit der Kurbelarme ebenso möglich sein, wie ein gezieltes positives Verstellen des Antriebsritzels und damit der Kurbelarme in Tretrichtung, wie durch das ±-Symbol angegeben ist.

Um die Montage der Kettenumlenkung zu erleichtern, den Einbau unterschiedlicher Antriebsritzel zu ermöglichen und/oder um dem Benutzer die Möglichkeit zu bieten, den Pedalrückschlag auch gezielt einstellen zu können, kann bei einer bevorzugten Ausführungsform der Erfindung die Kettenumlenkung relativ zum Antriebsritzel justiert werden. Zum Justieren kann die Kettenumlenkung oder die Befestigung am Hauptrahmen oder am Hinterbau beispielsweise mit exzentrischen Feststellschrauben, Langlöchern, etc. versehen sein.

Bei einer besonders bevorzugten Ausführungsform der erfindungsgemäßen Kettenumlenkung ist die Kettenumlenkung bezüglich des Antriebsritzels ortsfest am Hauptrahmen vorgesehen, ändert also ihre Position bezüglich des Antriebsritzels nicht während des Ein- und Ausfederns des Hinterrades. Diese Art der Befestigung ist insbesondere dann von Vorteil, wenn die Kinematik des Hinterbaus die Bewegung der Nabe des Hinterrades entlang einer bogenförmigen Bahn bewirkt, bei der ein zumindest annähernd gleichbleibender Drehpunkt der Nabe erhalten bleibt. Des weiteren ist die ortsfeste Anordnung der Kettenumlenkung auch von Vorteil, da der Aufwand für die Montage vergleichsweise gering ist.

In einer besonders bevorzugten Ausführungsform der ortsfesten Anordnung der Kettenumlenkung wird vorgeschlagen, das Schwenklager für den Hinterbau benachbart zum elektrischen Antrieb am Hauptrahmen vorzusehen und die Kettenumlenkung konzentrisch oder unmittelbar benachbart zum Schwenklager des beweglichen Hinterbaus am Hauptrahmen anzuordnen.

Anstelle die Kettenumlenkung am oder benachbart zum Schwenklager vorzusehen, wird bei einer Ausführungsform mit ortsfester Kettenumlenkung vorgeschlagen, die Kettenumlenkung an einer Strebe zu halten, die am Hauptrahmen, beispielsweise am Sitzrohr oder am Unterrohr des Hauptrahmens an geeigneter Stelle befestigt ist. Die Position der Strebe wird dabei so gewählt, dass der Punkt, um den der obere Kettenabschnitt an der Kettenumlenkung geschwenkt wird, möglichst im Bereich des imaginären Drehpunktes des Hinterbaus angeordnet ist. Insbesondere, wenn die Kettenumlenkung justierbar ausgebildet ist, bietet die am Hauptrahmen vorgesehene Strebe für die Kettenumlenkung die Möglichkeit, die Kettenumlenkung je nach Typ des verbauten Hinterbaus an geeigneter Stelle zu befestigen.

Bei einer zur ortsfesten Anordnung der Kettenumlenkung alternativen Ausführungsform wird vorgeschlagen, die Kettenumlenkung bezüglich des Antriebsritzels entlang einer vorgegebenen Bewegungsbahn beweglich vorzusehen. Der Einsatz der beweglichen Kettenumlenkung ist insbesondere dann von Vorteil, wenn Hinterbauten zum Einsatz kommen, die aufgrund ihrer Kinematik beim Ein- und Ausfedern die Nabe des Hinterrades beispielsweise entlang einer von einer nach vorne gerichteten Bogenform abweichenden Bahn bewegen, beispielsweise einer nach hinten gerichteten Bogenform oder eine S-Form. In dem die Kettenumlenkung beim Ein- und Ausfedern mitbewegt wird, kann die gewünschte Wirkung der Kettenumlenkung gegebenenfalls sogar über die gesamte Bewegung des Hinterbaus beim Ein- und Ausfedern aufrecht erhalten bleiben.

Bei einer beweglichen Kettenumlenkung ist es ferner von besonderem Vorteil, dass nicht nur der Abstand zwischen dem Abtriebsritzel und der Kettenumlenkung sich allenfalls in beschränktem Maße ändert. Ferner ist zu beachten, das auch der Abstand der Kettenumlenkung zum Antriebsritzel möglichst unverändert bleibt. Dies lässt sich beispielsweise erreichen, indem die Drehachse des Antriebsritzels und die Schwenkachse der Kettenumlenkung zusammenfallen, zumindest aber benachbart zueinander verlaufen. Bei komplexeren Bewegungsabläufen sollte zumindest über einen Teil der Bewegung der Kettenumlenkung ein in etwa gleichbleibender Abstand zur Antriebsachse eingehalten werden.

Dabei ist es von besonderem Vorteil, wenn die Kettenumlenkung an einem beweglichen Hebel oder an einer beweglichen Hebelanordnung vorgesehen ist, dessen bzw. deren Bewegung an die Bewegung des Hinterbaus derart gekoppelt ist, dass sich die Kettenumlenkung entlang einer Bewegungsbahn bewegt, die mit der Bewegungsbahn des Hinterbaus korreliert. Die Angleichung der Bewegung der Kettenumlenkung an die Bewegung des Hinterbaus erfolgt vorzugsweise über eine mechanische Kopplung, beispielsweise durch entsprechende Stellglieder, kann jedoch auch über eine hydraulische Kopplung oder auch hydraulisch unterstützt erfolgen.

Um eine gegenüber dem Antriebsritzel bewegliche Kettenumlenkung zu realisieren, deren Bewegungsbahn an die Bewegung des Hinterbaus gekoppelt ist, wird vorgeschlagen, die Kettenumlenkung an einer Komponente des Hinterbaus, vorzugsweise an einer der Kettenstreben zu befestigen. Es ist jedoch auch möglich, die Kettenumlenkung beweglich am Hinterbau zu befestigen und über geeignete Hebelanordnungen gleichzeitig auch mit anderen Komponenten des Hinterbaus, beispielsweise eine der Sitzstreben oder auch mit dem Hauptrahmen zu koppeln.

Für den Hinterbau sind unterschiedlichste Ausführungsformen für die Erfindung verwendbar. Als bekannteste Hinterbaukonstruktionen sind zu nennen, der Eingelenker, der Dave-Weagle-Link, der Horst-Link, der VPP-Link (Virtual Pivot Point) oder auch der Mehrgelenker, sowie Abwandlungen dieser Hinterbaukonstruktionen. Alle diese Hinterbaukonstruktionen eignen sich generell für die vorliegende Erfindung.

Generell kann ein Hinterbau verwendet werden, der als Komponente zwei Kettenstreben aufweist, welche am Hauptrahmen angelenkt sind. Unter dem Begriff "Anlenken" oder "angelenkt" wird erfindungsgemäß sowohl verstanden, dass die Kettenstreben unmittelbar an einem Schwenklager am Hauptrahmen schwenkbar gelagert sind, oder dass die Kettenstreben über einen Hebel, eine Wippe (Rocker) oder ähnliches indirekt am Hauptrahmen des Fahrrades schwenkbar gelagert sind. Um die Federbewegung des Hinterbaus zu dämpfen, ist der Hinterbau ferner in bekannter Weise mit einer Dämpfungseinrichtung gekoppelt, wobei die Dämpfungseinrichtung auch hier entweder unmittelbar oder mittelbar über Hebel, Hebelanordnungen, Wippen, etc. mit dem Hinterbau zur Kraftübertragung in Wirkverbindung steht. Die Dämpfungseinrichtung ist ihrerseits am Hauptrahmen vorzugsweise schwenkbar gelagert.

Bei einer besonders bevorzugten Ausführungsform weist der Hinterbau als weitere Komponente zwei Sitzstreben auf, die gemeinsam das Ausfallende für das Hinterrad bilden und nahe dem Ausfallende mit den Kettenstreben fest verbunden sind, wobei die Kettenstreben wiederum an ihren jeweils anderen Enden mit jeweils einem Hebel gelenkig verbunden, der seinerseits am Schwenklager des Hauptrahmens gelagert ist. Die Sitzstreben sind dagegen an ihren jeweils anderen Enden mit jeweils einem zweiten Hebel gelenkig verbunden, welche ihrerseits an einem weiteren am Hauptrahmen vorgesehenen Schwenklager schwenkbar gelagert sind.

Bei einer alternativen Ausführungsform weist der Hinterbau zwei Kettenstreben sowie als weitere Komponenten zwei Sitzstreben auf, die gemeinsam das Ausfallende für das Hinterrad bilden und nahe dem Ausfallende mit den Kettenstreben gelenkig verbunden sind. Die jeweils anderen Enden der Sitzstreben sind jeweils durch einen Hebel oder eine Wippe mit dem Hauptrahmen gelenkig verbunden sind. Hierdurch ergibt sich ein besonders beweglicher Hinterbau, der je nach Länge der Streben sowie Positionierung der Gelenke unterschiedlichste Bewegungsbahnen beim Ein- und Ausfedern vollzieht.

Die Kettenumlenkung ist bei einer besonders bevorzugten Ausführungsform ein Kettenritzel. Das Kettenritzel ist nicht nur einfach zu montieren und vergleichsweise verschleißfrei und neigt kaum zu Ausfällen. Darüber hinaus wird die Kette vom Kettenritzel sicher geführt und auch abgestützt, ferner können auch größere Maßabweichungen im Kettenverlauf ausgeglichen werden. Auch ist ein Verlagern der Kette beim Einsatz von Ritzelpaketen problemlos möglich, bei denen die Kette in bekannter Weise mit Hilfe eines Schaltwerkes zwischen den Ritzeln hin und her bewegt wird, um die Übersetzung zu verändern.

Alternativ oder ergänzend kann die Kettenumlenkung auch durch eine Anordnung aus mehreren Ritzeln gebildet sein, welche beispielsweise an einem schwenkbar gelagerten gemeinsamen Träger gehalten sind. Auch ist die Verwendung eines Gleitschuhs oder einer Gleitführung als Kettenumlenkung möglich, bei dem bzw. bei der die Kette an einem Gleitelement aus einem verschleißarmen Werkstoff entlang leitet und abgestützt ist.

Nachfolgend wird die Erfindung anhand eines Ausführungsbeispiels sowie zwei Abwandlungen unter Bezugnahme auf die beigefügte Zeichnung näher erläutert. Darin zeigt:
- Fig. 1: eine schematische Seitenansicht eines erfindungsgemäßen Fahrrades mit gefedertem Hinterbau, der als VPP-Link ausgebildet ist, in seiner Ruhestellung;
- Fig. 2: eine schematische Seitenansicht des erfindungsgemäßen Fahrrades aus Fig. 1 mit vollständig eingefedertem Hinterbau;
- Fig. 3: eine schematische Seitenansicht einer ersten Abwandlung des erfindungsgemäßen Fahrrades mit gefedertem Hinterbau in Ruhestellung, wobei der Hinterbau als Dave-Weagle-Link ausgebildet ist;
- Fig. 4: eine schematische Seitenansicht der Abwandlung aus Fig. 3 mit vollständig eingefedertem Hinterbau;
- Fig. 5: eine schematische Seitenansicht einer zweiten Abwandlung des erfindungsgemäßen Fahrrades mit gefedertem Hinterbau in Ruhestellung, wobei der Hinterbau als Horst-Link ausgebildet ist;
- Fig. 6: eine schematische Seitenansicht der Abwandlung aus Fig. 5 mit vollständig eingefedertem Hinterbau.

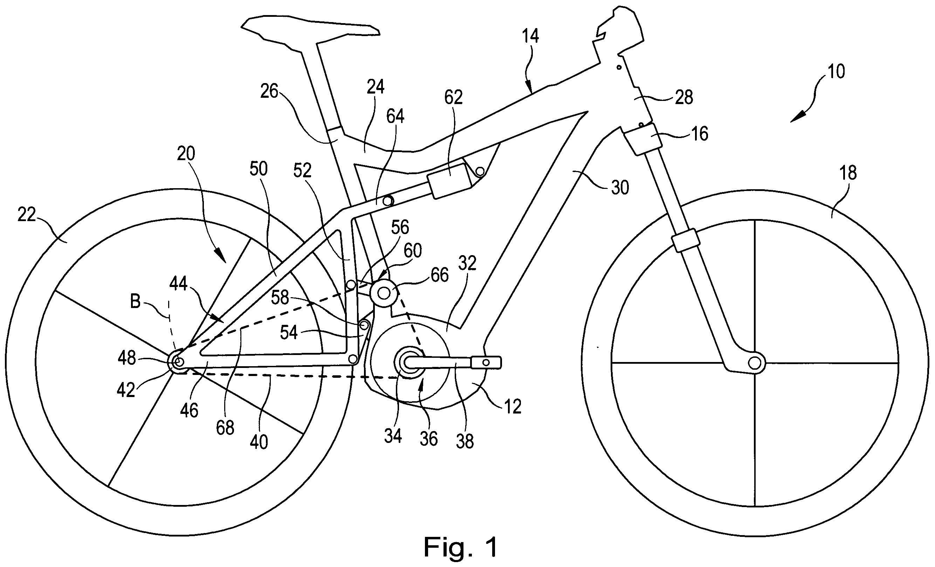

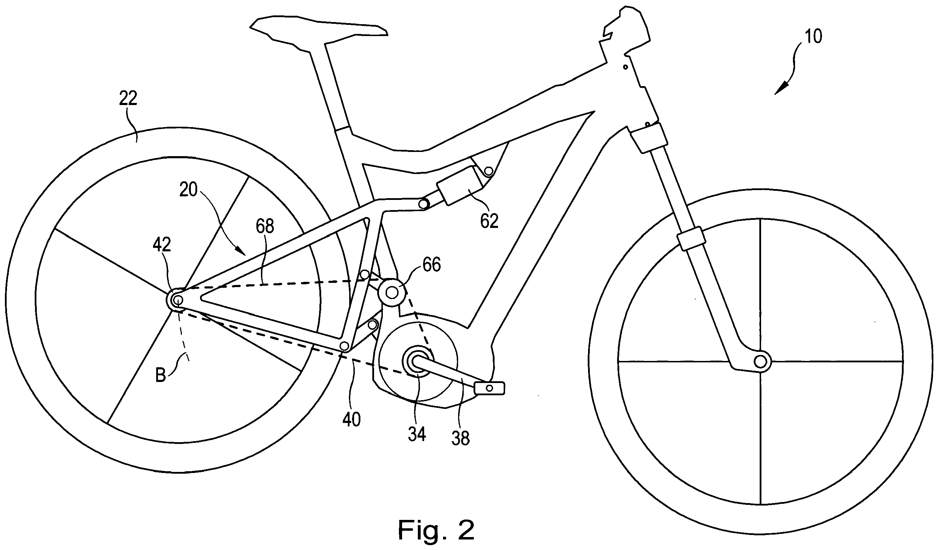

Die Fig.1 und 2 zeigen schematische Seitenansichten eines ersten Ausführungsbeispiels eines erfindungsgemäßen Fahrrades 10 mit elektrischen Antrieb 12. Das Fahrrad 10 hat einen Hauptrahmen 14, eine Gabel 16 mit gefedertem Vorderrad 18 und einen gefederten Hinterbau 20 für das Hinterrad 22.

Der Hauptrahmen 14 weist ein genicktes Oberrohr 24 auf, dessen eines Ende in bekannter Weise mit dem Sitzrohr 26 und dessen anderes Ende mit einem Steuerrohr 28 fest verbunden ist. Am Steuerrohr 28, in dem die Gabel 16 in bekannter Weise drehbar gelagert ist, ist das Unterrohr 30 befestigt, dessen anderes Ende mit einem Rahmenelement 32 fest verbunden ist. Am Rahmenelement 32 ist ferner das abgeknickte Ende des Sitzsrohrs 26 fest verbunden.

Das Rahmenelement 32 ist als Interface für den elektrischen Antrieb 12 ausgebildet. Der elektrische Antrieb 12 ist in das an die Form und Gestalt des Gehäuses des elektrischen Antriebes 12 angepasste Rahmenelement 32 eingesetzt und mit diesem beispielsweise durch Schrauben lösbar verbunden.

Wie zu erkennen ist, ist der elektrische Antrieb 12 als Tretlagermotor ausgebildet. Dies bedeutet, dass das Antriebsritzel 34 des elektrischen Antriebes 12 koaxial zur Welle des Tretlagers 36 des Fahrrades 12 angeordnet ist. Das Antriebsritzel 34 ist durch ein nicht näher gezeigtes Getriebe mit der Welle des Tretlagers 36 mechanisch gekoppelt und überträgt das Drehmoment, das der Benutzer auf die Kurbelarme 38 ausübt. Bei dem erfindungsgemäßen Fahrrad 10 wird ein besonders kleines Antriebsritzel 20 verwendet, dass lediglich eine Zähnezahl von maximal 20 Zähnen aufweist. Entsprechend hoch ist dann auch die Übersetzung zwischen dem eigentlichen Tretlager und dem Antriebsritzel 34 im elektrischen Antrieb 12.

Ein Grund für die Verwendung eines vergleichsweise kleinen Antriebsritzels 34 ist der, dass hierdurch verglichen mit herkömmlichen Antrieben bei kleinerem Bauraum für den elektrischen Antrieb 12 hohe Drehzahlen bereitgestellt werden können, so dass der elektrische Antrieb 12 schneller anspricht. Auf das Antriebsritzel 34 ist eine Kette 40 aufgezogen, die das Drehmoment auf eines der Abtriebsritzel 42 eines Ritzelpakets des Hinterrades 22 überträgt.

Der Hinterbau 20 ist bei diesem, Ausführungsbeispiel als VPP-Link (Virtual Pivot Point) ausgebildet. Der Hinterbau 20 weist zwei geschlossene dreieckige Rahmen 44 auf, die jeweils aus einer Kettenstrebe 46, einer mit dieser am Ausfallende 48 fest verbundenen Sitzstrebe 50 sowie eine die Enden der Kettenstrebe 46 und der Sitzstrebe 50 verbindenden Verbindungsstrebe 52 gebildet sind.

Die beiden dreieckigen Rahmen 44 sind auch miteinander verbunden und bilden den steifen Hinterbau 20. Am Hinterbau 20 sind zwei Hebelpaare 54 und 56 schwenkbar befestigt. Das in den Fig. 1 und 2 unten gezeigte erste Hebelpaar 54 ist an einem am Sitzrohr 26 vorgesehenen ersten Schwenklager 58 schwenkbar gelagert, während das zweite Hebelpaar 56 an einem zweiten Schwenklager 60 schwenkbar gelagert sind, das oberhalb des ersten Schwenklagers 58 am Sitzrohr 26 vorgesehen ist.

Der Hinterbau 20 ist ferner mit einer an der Unterseite des Oberrohrs 24 schwenkbar gelagerten Dämpfungseinrichtung 62 verbunden, welche mit einer gabelförmigen Verlängerung 64 der beiden Sitzstreben 50 gekoppelt ist.

Fährt nun das erfindungsgemäße Fahrrad 10 mit seinem Hinterrad 22 über ein Hindernis, wird der gesamte Hinterbau 20 entgegen die Wirkung der Dämpfungseinrichtung 62 angehoben. Aufgrund der Form und Gestalt des Hinterbaus 20, der Position der Hebelpaare 54 und 56 sowie der Position der Schwenklager 58 und 60 bewegt sich das Hinterrad 22 beim Einfedern entlang einer in den Fig. 1 und 2 strichliert dargestellten Bahn B in seine eingefederte Endstellung (vgl. Fig. 2) und wird nach dem Überqueren des Hindernisses von der Dämpfungseinrichtung 62 wieder in seine Ausgangspostion (vgl. Fig. 1) zurückbewegt.

Erfindungsgemäß ist das Fahrrad 10 nun zusätzlich mit einem Kettenritzel 66 ausgestattet, das zwischen dem Antriebsritzel 34 des elektrischen Antriebes 12 und der Nabe bzw. den Abtriebsritzeln 42 des Hinterrades 22 am Sitzrohr 26 des Hauptrahmens 14 drehbar gelagert ist. Das Kettenritzel 66 dient als Kettenumlenkung für den oberen Kettenabschnitt 68 der Kette 40, mit dem das Drehmoment vom Antriebsritzel 34 auf das Abtriebsritzels 42 des Hinterrades 22 übertragen wird.

Auf diese Weise wird erreicht, dass die Kette 40 vor dem Antriebsritzel 34 umgelenkt ist und Bewegung des Hinterbaus 20 den Betrieb des elektrischen Antriebes 12 sowie die Verwendung der Kurbelarme 38 nicht beeinträchtigen, wie nachfolgend unter Bezugnahme auf die beiden Fig. 1 und 2 näher erläutert wird.

Die Position des Kettenritzels 66 ist nicht willkürlich gewählt. Vielmehr besteht ein wesentlicher Gedanke der Erfindung besteht darin, den oberen Kettenabschnitt 68 der Kette 40 durch das als Kettenumlenkung dienende Kettenritzel 66 abzustützen. Das Kettenritzel 66 ist dabei so bezüglich des Antriebsritzels 34 angeordnet, dass das Kettenritzel 66 in jeder Stellung des Hinterbaus 20, also auch wenn das Hinterrad 22 vollständig eingefedert ist, den oberen Kettenabschnitt 68 abstützt.

Erfindungsgemäß wird nun vorgeschlagen, die Bewegung des Hinterbaus 20 von der Position der Kette 40 am Antriebsritzel 34 zu entkoppeln. Zu diesem Zweck wird mit Hilfe des Kettenritzels 66 ersatzweise ein Punkt vorgegeben, um den der mit dem Abtriebsritzel 42 in Eingriff stehende obere Kettenabschnitt 68 schwenkt.

Die Position des als Kettenumlenkung dienenden Kettenritzels 66 ist dabei so gewählt, dass der Punkt, an dem der obere Kettenabschnitt 68 vom Kettenritzel 66 abgestützt ist, in einem Bereich angeordnet ist, der zumindest benachbart zu dem tatsächlichen Drehpunkt angeordnet ist, um den sich der Hinterbau 20 bewegt. Hierdurch wird erreicht, dass der Abstand zwischen dem Punkt, an dem der obere Kettenabschnitt 68 vom Kettenritzel 66 abgestützt ist, und dem Punkt, an dem der obere Kettenabschnitt 68 mit dem Abtriebsritzel 42 des Hinterrades 22 in Eingriff steht, zumindest über einen Teil der Bewegung des Hinterrades 22 während des Ein- und Ausfederns zumindest annähernd unverändert bleibt.

Dadurch dass der Abstand zwischen dem Punkt, an dem der obere Kettenabschnitt 68 vom Kettenritzel 66 abgestützt ist, und dem Punkt, an dem der obere Kettenabschnitt 68 mit dem Abtriebsritzel 42 des Hinterrades 22 in Eingriff steht kaum größer wird, tritt die eingangs beschriebene Kettenrückstellbewegung allenfalls in geringem Umfang auf, so dass auch der unerwünschte Pedalrückschlag minimiert ist. Das Kettenritzel 66 kann dabei so bezüglich des Antriebsritzels 42 positioniert werden, dass die Kettenrückstellbewegung entweder minimiert ist oder eine definierte Kettenrückstellbewegung vorgegeben werden kann.

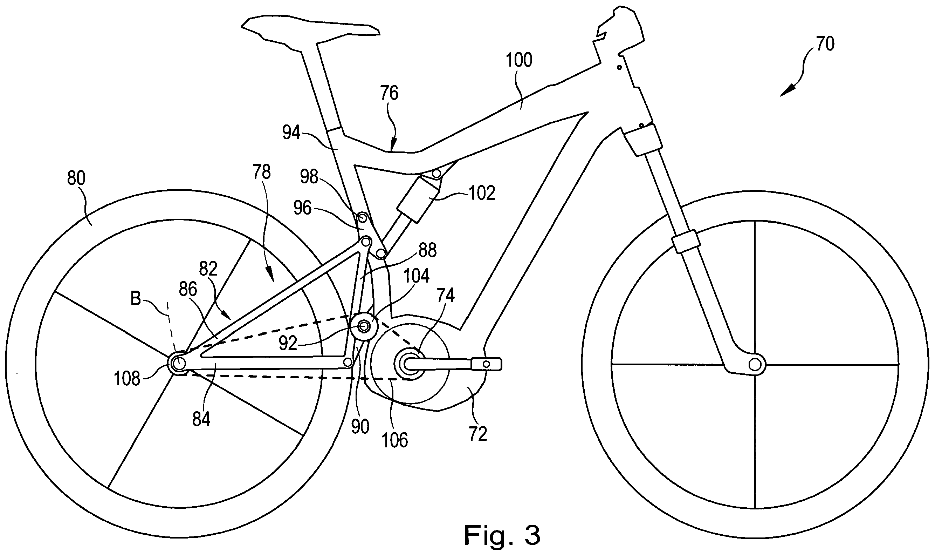

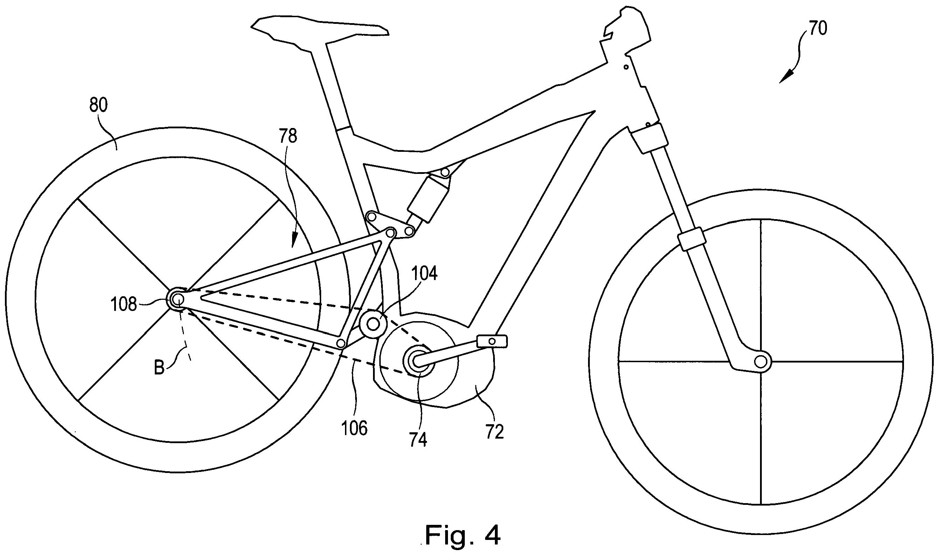

In den Fig. 3 und 4 ist eine erste Abwandlung 70 des erfindungsgemäßen Fahrrades 10 gezeigt. Dabei wurden die Bauteile des Fahrrades 70, die mit den Bauteilen des in den Fig. 1 und 2 gezeigten Fahrrades 10 übereinstimmen und für die Funktion des Fahrrades 70 von keiner besonderen Bedeutung sind, nicht weiter erörtert.

Auch hier hat das Fahrrad 70 einen elektrischen Antrieb 72 mit einem vergleichsweise kleinen Antriebsritzel 74 und einen Hauptrahmen 76. Wesentlicher Unterschied des in den Fig. 3 und 4 gezeigten Fahrrades 70 zu dem in den Fig. 1 und 2 gezeigten Fahrrad 10 ist der Hinterbau 78 für das Hinterrad 80.

Der in den Fig. 3 und 4 gezeigte Hinterbau 78 weist zwar gleichfalls zwei Rahmen 82 auf, die jeweils aus einer Kettenstrebe 84, eine Sitzstrebe 86 und einer Verbindungstrebe 88 gebildet sind. Auch ist jeder Rahmen 82 mit seinem unteren Ende an einem Hebelpaar 90 angelenkt und die beiden Hebelpaar 90 der beiden Rahmen 82 sind an einem gemeinsamen Schwenklager 92 am Sitzrohr 94 des Hauptrahmens 76 schwenkbar angelenkt.

Anders als bei der in den Fig. 1 und 2 gezeigten Variante ist bei dieser Abwandlung das obere Ende jedes Rahmens 82 mit einer Wippe 96 schwenkbar verbunden, deren eines Ende an einem zweiten Schwenklager 98 am Sitzrohr 94 gelagert ist und dessen anderes Ende mit einer am Oberrohr 100 des Hauptrahmens 76 gelagerten Dämpfungseinrichtung 102 gekoppelt ist.

Auch bei dieser ersten Abwandlung weist das Fahrrad 70 ein als Kettenumlenkung dienendes Kettenritzel 104 auf. Das Kettenritzel 104 ist in diesem Fall jedoch konzentrisch zur Achse des ersten Schwenklagers 92 angeordnet.

Sobald das Hinterrad 80 auf ein Hindernis trifft, wird es gegen die Kraft der Dämpfungseinrichtung 102 angehoben. Aufgrund des Aufbaus sowie der Gelenkpunkte des Hinterbaus 78 bewegt sich dieser entlang der Bahn B. Gleichzeitig bewirkt das Kettenritzel 104, dass der Abstand zwischen dem als Drehpunkt für die Kette 106 dienenden Kettenritzel 104 und dem Abtriebsritzel 108 des Hinterrades 80 zumindest annähernd gleichbleibt und der unerwünschte Pedalrückschlag nicht oder allenfalls in geringem Umfang auftritt.

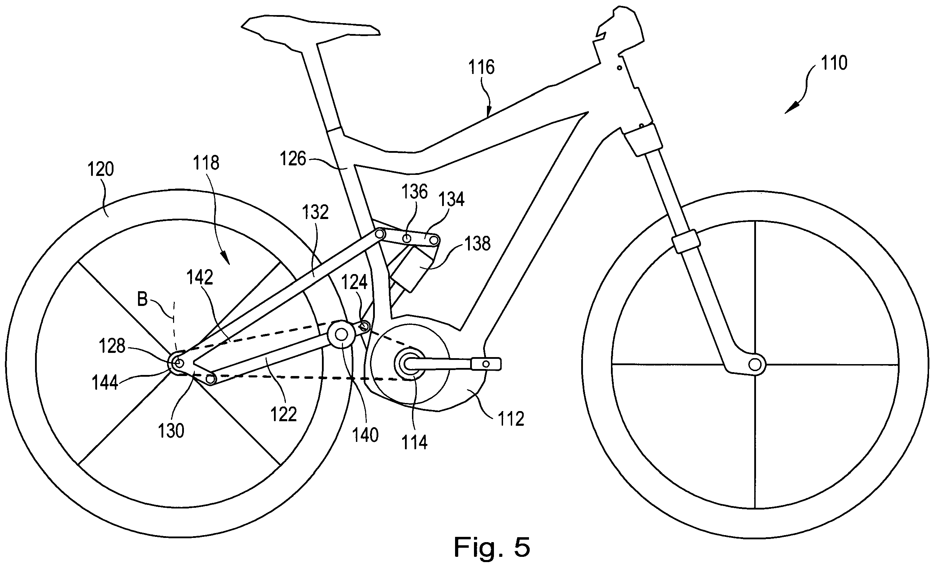

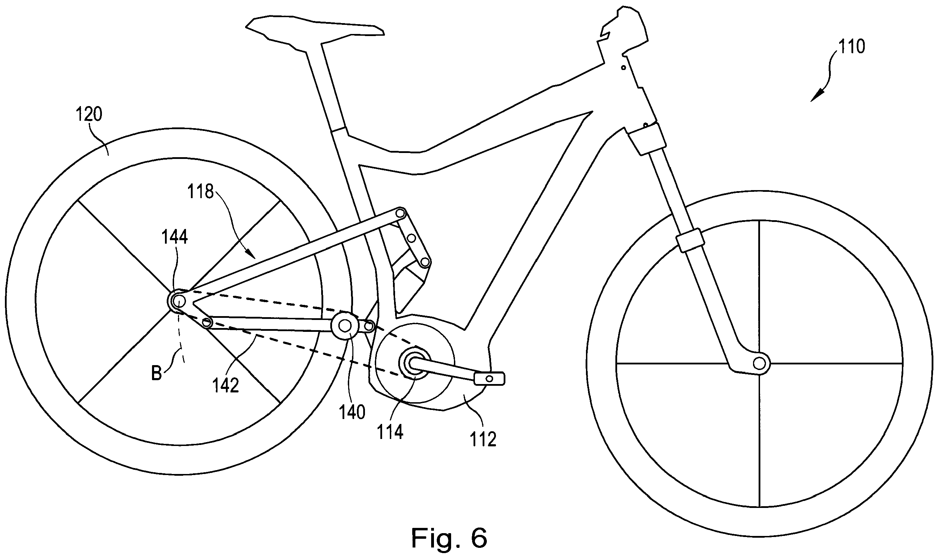

In den Fig. 5 und 6 ist eine zweite Abwandlung 110 des erfindungsgemäßen Fahrrades 10 gezeigt. Auch hier wurden die Bauteile des Fahrrades 110, die mit den Bauteilen des in den Fig. 1 und 2 gezeigten Fahrrades 10 übereinstimmen und für die Funktion des Fahrrades 110 von keiner besonderen Bedeutung sind, nicht weiter erörtert.

Das Fahrrad 110 hat gleichfalls einen elektrischen Antrieb 112 mit einem vergleichsweise kleinen Antriebsritzel 114 und einen Hauptrahmen 116. Wesentlicher Unterschied des in den Fig. 5 und 6 gezeigten Fahrrades 110 zu dem in den Fig. 1 und 2 gezeigten Fahrrad 10 ist auch hier der Hinterbau 118 für das Hinterrad 120.

Der in den Fig. 5 und 6 gezeigte Hinterbau 118 weist keinen Rahmen auf. Vielmehr sind die beiden Kettenstreben 122 mit ihrem einen Ende unmittelbar an einem ersten Schwenklager 124 schwenkbar gelagert, welches nahe dem elektrischen Antrieb 112 am Sitzrohr 126 vorgesehen ist.

Das andere Ende jeder Kettenstrebe 122 ist nahe einem Ausfallende 128 für das Hinterrad 120 an einer Abwinklung 130 einer Sitzstrebe 132 angelenkt. Das andere Ende jeder Sitzstrebe 132 ist mit dem Ende einer gemeinsamen Wippe 134 schwenkbar verbunden. Der mittlere Anlenkpunkt der Wippe 134 ist an einem zweiten Schwenklager 136 am Sitzrohr 126 gelagert ist, während das andere Ende der Wippe 134 mit einer am Sitzrohr 126 nahe dem elektrischen Antrieb 112 schwenkbar gelagerten Dämpfungseinrichtung 138 gekoppelt ist.

Auch bei dieser zweiten Abwandlung weist das Fahrrad 110 ein als Kettenumlenkung dienendes Kettenritzel 140 auf. Das Kettenritzel 140 ist in diesem Fall an der in Fahrtrichtung des Rades gesehen rechten Kettenstrebe 122 des Hinterbaus 118 drehbar gelagert.

Sobald das Hinterrad 120 auf ein Hindernis trifft, wird es gegen die Kraft der Dämpfungseinrichtung 138 angehoben. Dabei bewegt sich der Hinterbau 118 entlang einer sich durch den Aufbau des Hinterbaus 118 ergebenden Bahn B. Gleichzeitig bewirkt das Kettenritzel 140, dass der Abstand zwischen dem als Drehpunkt für die Kette 142 dienenden Kettenritzel 140 und dem Abtriebsritzel 144 des Hinterrades 120 zumindest annähernd gleichbleibt und der unerwünschte Pedalrückschlag nicht oder allenfalls in geringem Umfang auftritt.

Bei dem erfindungsgemäßen Fahrrad lässt sich je nach Art und Konstruktion des Hinterbaus der Punkt, um den sich der obere Kettenabschnitt bezüglich des Hauptrahmens dreht definiert vorgeben, so dass der durch die Kettenrückstellbewegung verursachte Pedalrückschlag gezielt beeinflussen und auch reduzieren lässt.

### Bezugszeichenliste:

- 10: Fahrrad
- 12: elektrischer Antrieb
- 14: Hauptrahmen
- 16: Gabel
- 18: gefedertes Vorderrad
- 20: gefederter Hinterbau
- 22: Hinterrad
- 24: Oberrohr
- 26: Sitzrohr
- 28: Steuerohr
- 30: Unterrohr
- 32: Rahmenelement
- 34: Antriebsritzel
- 36: Tretlager
- 38: Kurbelarme
- 40: Kette
- 42: Abtriebsritzel
- 44: Rahmen
- 46: Kettenstrebe
- 48: Ausfallende
- 50: Sitzstrebe
- 52: Verbindungsstrebe
- 54: Hebelpaar
- 56: Hebelpaar
- 58: erstes Schwenklager
- 60: zweites Schwenklager
- 62: Dämpfungseinrichtung
- 64: gabelförmige Verlängerung
- 66: Kettenritzel
- 68: oberer Kettenabschnitt

- 70: Fahrrad
- 72: elektrischer Antrieb
- 74: Antriebsritzel
- 76: Hauptrahmen
- 78: Hinterbau
- 80: Hinterrad
- 82: Rahmen
- 84: Kettenstrebe
- 86: Sitzstrebe
- 88: Verbindungstrebe
- 90: Hebelpaar
- 92: erstes Schwenklager
- 94: Sitzrohr
- 96: Wippe
- 98: zweites Schwenklager
- 100: Oberrohr
- 102: Dämpfungseinrichtung
- 104: Kettenritzel
- 106: Kette
- 108: Abtriebsritzel

- 110: Fahrrad
- 112: elektrischer Antrieb
- 114: Antriebsritzel
- 116: Hauptrahmen
- 118: Hinterbau
- 120: Hinterrad
- 122: Kettenstrebe
- 124: erstes Schwenklager
- 126: Sitzrohr
- 128: Ausfallende
- 130: Abwinkling
- 132: Sitzstrebe
- 134: Wippe
- 136: zweites Schwenklager
- 138: Dämpfungseinrichtung
- 140: Kettenritzel
- 142: Kette
- 144: Abtriebsritzel

## Patentansprüche

1. Fahrrad, insbesondere Mountainbike, mit einem Hauptrahmen (14; 76; 116), einem gefederten Hinterbau (20; 78; 118) für ein Hinterrad (22; 80; 120), der an mindestens einem Schwenklager (58, 60; 92, 98; 124, 136) am Hauptrahmen (14; 76; 116) angelenkt ist und die Nabe des Hinterrades (22; 80; 120) beim Ein- und Ausfedern entlang einer vorgegebenen Bahn (B) führt, einem am Hauptrahmen (14; 76; 116) gehaltenen elektrischen Antrieb (12; 72; 112), dessen Antriebsritzel (34; 74; 114) mit der Welle eines Tretlagers gekoppelt ist, und mindestens einem koaxial zur Nabe am Hinterrad (22; 80; 120) vorgesehenen Abtriebsritzel (34; 108; 144), das über eine Kette (40; 106; 142) mit dem Antriebsritzel (34; 74; 114) des elektrischen Antriebs (12; 72; 112) in Wirkverbindung steht,
wobei die Zähnezahl des Antriebsritzels (34; 74; 114) des elektrischen Antriebes (12; 72; 112) kleiner oder gleich 20 ist,
wobei der zur Drehmomentübertragung vom Antriebsritzel (34; 74; 114) auf das Abtriebsritzel (42; 108; 144) dienende obere Kettenabschnitt (68) unter Vorspannung über eine Kettenumlenkung (66; 104; 140), die zwischen dem Antriebsritzel (34; 74; 114) und dem Abtriebsritzel (42; 108; 144) des Hinterrades (22; 80; 120) angeordnet ist, geführt ist, und
wobei die Kettenumlenkung (66; 104; 140) derart zwischen dem Antriebsritzel (34; 74; 114) und dem Abtriebsritzel (42; 108; 144) positioniert ist, dass sich der Abstand zwischen dem Punkt, an dem der obere Kettenabschnitt (68) mit dem Abtriebsritzel (42; 108; 144) des Hinterrades (22; 80; 120) gerade in Eingriff steht, und dem Punkt der Kettenumlenkung (66; 104; 140), um den die Kette (40; 106; 142) während des Ein- und Ausfederns des Hinterrades (22; 80; 120) im wesentlichen geschwenkt wird, entlang der Bahn (B), entlang der sich die Nabe des Hinterrades (22; 80; 120) während des Ein- und Ausfederns bewegt, allenfalls so geringfügig verändert, dass sich die Kurbelarme (38) des Tretlagers (36) beim Ein- und Ausfedern um einen maximal zulässigen Winkel bezogen auf die nichteingefederte Position des Hinterrades (22; 80; 120) verdrehen, der in einem Bereich von ± 20° liegt.

2. Fahrrad nach Anspruch 1, **dadurch gekennzeichnet, dass** der maximal zulässige Winkel in einem Bereich von ± 15°, bevorzugt in einem Bereich von ± 10°liegt.

3. Fahrrad nach Anspruch 1 oder 2, **dadurch gekennzeichnet, dass** die Kettenumlenkung (66; 104; 140) relativ zum Antriebsritzel (34; 74; 114) justierbar ist.

4. Fahrrad nach Anspruch 1, 2 oder 3, **dadurch gekennzeichnet, dass** die Kettenumlenkung (66; 104) bezüglich des Antriebsritzels (34; 74) ortsfest am Hauptrahmen (14; 76) vorgesehen ist.

5. Fahrradrahmen nach Anspruch 4, **dadurch gekennzeichnet, dass** das Schwenklager (58; 92) für den Hinterbau (20; 78) benachbart zum elektrischen Antrieb (12; 72) am Hauptrahmen (14; 76) vorgesehenen ist, und dass die Kettenumlenkung (66; 104) konzentrisch oder unmittelbar benachbart zum Schwenklager (58; 92) des beweglichen Hinterbaus (20; 78) am Hauptrahmen (14; 76) angeordnet ist.

6. Fahrrad nach Anspruch 4, **dadurch gekennzeichnet, dass** die Kettenumlenkung an einer Strebe gehalten ist, welche am Hauptrahmen, vorzugsweise am Sitzrohr oder am Unterrohr des Hauptrahmens vorgesehen ist.

7. Fahrrad nach einem der Ansprüche 1 bis 3, **dadurch gekennzeichnet, dass** die Kettenumlenkung (140) an einer Komponente des Hinterbaus (118) gehalten ist.

8. Fahrrad nach Anspruch 1 oder 2, **dadurch gekennzeichnet, dass** die Kettenumlenkung (140) bezüglich des Antriebsritzels (114) entlang einer vorgegebenen Bewegungsbahn beweglich ist.

9. Fahrrad nach Anspruch 7, **dadurch gekennzeichnet, dass** die Kettenumlenkung (140) an einem beweglichen Hebel (122) oder an einer beweglichen Hebelanordnung vorgesehen ist, welcher bzw. welche mit der Bewegung des Hinterbaus (118) derart gekoppelt ist, dass sich die Kettenumlenkung (140) entlang ihrer vorgegebenen Bewegungsbahn bewegt.

10. Fahrrad nach einem der Ansprüche 1 bis 9, **dadurch gekennzeichnet, dass** der Hinterbau (20; 78; 118) als Komponente zwei Kettenstreben (46; 84; 122) aufweist, welche am Hauptrahmen (14; 76; 116) angelenkt sind, und dass mindestens eine mit dem Hauptrahmen (14; 76; 116) und dem Hinterbau (20; 78; 118) gekoppelte Dämpfungseinrichtung (62; 102; 138) die Bewegungen des Hinterbaus (20; 78; 118) dämpft.

11. Fahrrad nach Anspruch10, **dadurch gekennzeichnet, dass** der Hinterbau (20; 78) als weitere Komponente zwei Sitzstreben (50; 86) aufweist, die gemeinsam das Ausfallende für das Hinterrad (22; 80) bilden und nahe dem Ausfallende mit den Kettenstreben (46; 84) fest verbunden sind, dass die Kettenstreben (46; 84) an ihren jeweils anderen Enden mit jeweils einem Hebel (54; 90) gelenkig verbunden sind, der seinerseits am Schwenklager (58; 92) des Hauptrahmens (14; 76) gelagert ist, dass die Sitzstreben (50; 86) an ihren jeweils anderen Enden mit jeweils einem zweiten Hebel (56) oder einer Wippe (96) gelenkig verbunden sind, und dass die zweiten Hebel (56) oder die Wippe (96) an einem weiteren am Hauptrahmen (14; 76) vorgesehenen Schwenklager (60; 98) gelagert sind.

12. Fahrrad nach Anspruch 10, **dadurch gekennzeichnet, dass** die Kettenstreben (122) des Hinterbaus (118) unmittelbar an dem Schwenklager (124) gelagert sind.

13. Fahrrad nach Anspruch 12, **dadurch gekennzeichnet, dass** der Hinterbau (118) als weitere Komponente zwei Sitzstreben (132) aufweist, die gemeinsam das Ausfallende (128) für das Hinterrad (120) bilden, nahe dem Ausfallende (128) mit den Kettenstreben (122) und an ihren jeweils anderen Enden durch jeweils einen Hebel oder eine Wippe (134) mit dem Hauptrahmen (116) gelenkig verbunden sind.

14. Fahrrad nach einem der vorhergehenden Ansprüche, **dadurch gekennzeichnet, dass** die Kettenumlenkung ein Kettenritzel (66; 104; 140) ist.

15. Fahrrad nach einem der vorhergehenden Ansprüche, **dadurch gekennzeichnet, dass** der Hauptrahmen (14; 76 116) ein Rahmenelement (32) aufweist, welches das Sitzrohr (26; 94, 126) mit dem Unterrohr (30) des Hauptrahmens (14; 76 116) verbindet, dass an dem Rahmenelement (32) eine Aufnahme für den elektrischen Antrieb (12; 72; 112) vorgesehen ist, und dass das Schwenklager (58, 60; 92, 98; 124, 136) für den Hinterbau (20; 78; 118) am Rahmenelement (32) oder unmittelbar benachbart zum Rahmenelement (32) am Sitzrohr (26; 94, 126) vorgesehen ist.

## Claims

1. A bicycle, particularly a mountain bike, having a main frame (14; 76; 116), a sprung rear end (20; 78; 118) for a rear wheel (22; 80; 120) hinged at at least one pivot bearing (58, 60; 92, 98; 124, 136) on the main frame (14; 76; 116) and guiding the hub of the rear wheel (22; 80; 120) along a defined path (B) when springing in and out, an electric drive (12; 72; 112) mounted on the main frame (14; 76; 116), the driving pinion (34; 74; 114) thereof being coupled to the shaft of a bottom bracket bearing, and at least one driven pinion (34; 108; 144) provided coaxial to the hub on the rear wheel (22; 80; 120) and operatively connected to the driving pinion (34; 74; 114) of the electric drive (12; 72; 112) by means of a chain (40; 106; 142),
the number of teeth of the driving pinion (34; 74; 114) of the electric drive (12; 72; 112) being less than or equal to 20,
the upper chain segment (68) serving for transmitting torque from the driving pinion (34; 74; 114) to the driven pinion (42; 108; 144) is guided under pretension by means of a chain deflector (66; 104; 140) disposed between the driving pinion (34; 74; 114) and the driven pinion (42; 108; 144) of the rear wheel (22; 80; 120), and the chain deflector (66; 104; 140) being positioned between the driving pinion (34; 74; 114) and the driven pinion (42; 108; 144), such that the distance between the point at which the upper chain segment (68) just engages the driven pinion (42; 108; 144) of the rear wheel (22; 80; 120) and the point of the chain deflector (66; 104; 140) about which the chain (40; 106; 142) substantially pivots when the rear wheel (22; 80; 120) springs in and out, changes at most so slightly along the path (B) along which the hub of the rear wheel (22; 80; 120) displaces when springing in and out that the crank arms (38) of the bottom bracket bearing (36) rotate when springing in and out by a maximum permissible angle in a range of ± 20° relative to the non-spring-loaded position of the rear wheel (22; 80; 120).

2. The bicycle according to claim 1, **characterized in that** the maximum permissible angle lies in a range of ± 15°, preferably in a range of ± 10°.

3. The bicycle according to claim 1 or 2, **characterized in that** the chain deflector (66; 104; 140) is adjustable relative to the driving pinion (34; 74; 114).

4. The bicycle according to claim 1, 2, or 3, **characterized in that** the chain deflector (66; 104) is provided on the main frame (14; 76) stationary relative to the driving pinion (34; 74).

5. The bicycle according to claim 4, **characterized in that** the pivot bearing (58; 92) for the rear end (20; 78) is provided on the main frame (14; 76) adjacent to the electric drive (12; 72), and that the chain deflector (66; 104) is disposed on the main frame (14; 76) concentric or directly adjacent to the pivot bearing (58; 92) of the displaceable rear end (20; 78).

6. The bicycle according to claim 4, **characterized in that** the chain deflector is mounted on a strut provided on the main frame, preferably on the seat tube or on the down tube of the main frame.

7. The bicycle according to any one of the claims 1 through 3, **characterized in that** the chain deflector (140) is mounted on a component of the rear end (118).

8. The bicycle according to claim 1 or 2, **characterized in that** the chain deflector (140) is displaceable relative to the driving pinion (114) along a defined displacement path.

9. The bicycle according to claim 7, **characterized in that** the chain deflector (140) is provided on a displaceable lever (122) or on a displaceable lever arrangement coupled to the motion of the rear end (118) such that the chain deflector (140) is displaced along the defined displacement path thereof.

10. The bicycle according to any one of the claims 1 through 9, **characterized in that** the rear end (20; 78; 118) comprises as components two chainstays (46; 84; 122) hinged to the main frame (14; 76; 116), and that at least one damping device (62; 102; 138) coupled to the main frame (14; 76; 116) and to the rear end (20; 78; 118) damps the motions of the rear end (20; 78; 118).

11. The bicycle according to claim 10, **characterized in that** the rear end (20; 78) comprises as further components two seat stays (50; 86) together forming the dropout for the rear wheel (22; 80) and fixedly connected to the chainstays (46; 84) near the dropout, that the chainstays (46; 84) are each joined with a hinge to a lever (54; 90) each at the opposite ends thereof, said lever in turn being supported on the pivot bearing (58; 92) of the main frame (14; 76), that the seat stays (50; 86) are each joined with a hinge to a second lever (56) or a rocker (96) at the opposite ends thereof, and that the second lever (56) or the rocker (96) are supported on a further pivot bearing (60; 98) provided on the main frame (14; 76).

12. The bicycle according to claim 10, **characterized in that** the chainstays (122) of the rear end (118) are supported directly on the pivot bearing (124).

13. The bicycle according to claim 12, **characterized in that** the rear end (118) comprises as further components two seat stays (132) together forming the dropout (128) for the rear wheel (120), joined with a hinge to the chainstays (122) near the dropout end (128) and to the main frame (116) at the opposite ends thereof by one lever or rocker (134) each.

14. The bicycle according to any one of the preceding claims, **characterized in that** the chain deflector is a chain pinon (66; 104; 140).

15. The bicycle according to any one of the preceding claims, **characterized in that** the main frame (14; 76; 116) comprises a frame element (32) connecting the seat tube (26; 94; 126) to the down tube (30) of the main frame (14; 76; 116), that a receptacle for the electric drive (12; 72; 112) is provided on the frame element (32), and that the pivot bearing (58, 60; 92, 98; 124, 136) for the rear end (20; 78; 118) is provided on the seat tube (26; 94; 126) on the frame element (32) or directly adjacent to the frame element (32).

## Revendications

1. Bicyclette, en particulier VTT, avec un cadre principal (14; 76; 116), un triangle arrière à ressort (20; 78; 118) pour une roue arrière (22 ; 80; 120), qui est articulé sur au moins un palier pivotant (58, 60; 92, 98; 124, 136) sur le cadre principal (14; 76; 116) et guide le moyeu de la roue arrière (22; 80; 120) lors de la compression et de la détente le long d'une trajectoire prédéterminée (B), un entraînement électrique (12; 72; 112) maintenu sur le cadre principal (14; 76; 116), dont le pignon d'entraînement (34; 74; 114) est couplé avec l'arbre d'un pédalier, et au moins un pignon menant (34; 108; 144) prévu coaxialement au moyeu sur la roue arrière (22; 80; 120), qui est relié fonctionnellement par une chaîne (40; 106; 142) avec le pignon d'entraînement (34; 74; 114) de l'entraînement électrique (12; 72; 112),
dans lequel le nombre de dents du pignon d'entraînement (34; 74; 114) de l'entraînement électrique (12; 72; 112) est inférieur ou égal à 20,
dans lequel la section de chaîne supérieure (68) servant à la transmission du couple de rotation du pignon d'entraînement (34; 74; 114) au pignon menant (42; 108; 144) est guidée sous prétension via un renvoi de chaîne (66; 104; 140), qui est disposé entre le pignon d'entraînement (34; 74; 114) et le pignon menant (42; 108; 144) de la roue arrière (22; 80; 120), et dans lequel le renvoi de chaîne (66; 104; 140) est positionné entre le pignon d'entraînement (34; 74; 114) et le pignon menant (42; 108; 144) de telle sorte que la distance entre le point auquel la section de chaîne supérieure (68) est précisément en prise avec le pignon menant (42; 108; 144) de la roue arrière (22; 80; 120), et le point du renvoi de chaîne (66; 104; 140) autour duquel la chaîne (40; 106; 142) pivote pendant la compression et la détente de la roue arrière (22; 80; 120), le long de la trajectoire (B) le long de laquelle le moyeu de la roue arrière (22; 80; 120) se déplace pendant la compression et la détente, varie tout au plus si légèrement que les manivelles (38) du pédalier (36) lors de la compression et de la détente subissent une rotation d'un angle maximal admissible par rapport à la position non compressée de la roue arrière (22 ; 80; 120), qui est située dans une plage de ± 20°.

2. Bicyclette selon la revendication 1, **caractérisée en ce que** l'angle maximal admissible est dans une plage de ± 15°, de préférence dans une plage de ± 10°.

3. Bicyclette selon la revendication 1 ou 2, **caractérisée en ce que** le renvoi de chaîne (66; 104; 140) est réglable par rapport au pignon d'entraînement (34; 74; 114).

4. Bicyclette selon la revendication 1, 2 ou 3, **caractérisée en ce que** le renvoi de chaîne (66; 104) est prévu fixe sur le cadre principal (14; 76) par rapport au pignon d'entraînement (34; 74).

5. Cadre de bicyclette selon la revendication 4, **caractérisé en ce que** le palier pivotant (58; 92) pour le triangle arrière (20; 78) est prévu à côté de l'entraînement électrique (12; 72) sur le cadre principal (14; 76), et **en ce que** le renvoi de chaîne (66; 104) est disposé sur le cadre principal (14; 76) concentriquement ou immédiatement à côté du palier pivotant (58; 92) du triangle arrière mobile (20; 78).

6. Bicyclette selon la revendication 4, **caractérisée en ce que** le renvoi de chaîne est maintenu sur un support qui est prévu sur le cadre principal, de préférence sur le tube de selle ou sur le tube diagonal du cadre principal.

7. Bicyclette selon l'une des revendications 1 à 3, **caractérisée en ce que** le renvoi de chaîne (140) est maintenu sur un composant du triangle arrière (118).

8. Bicyclette selon la revendication 1 ou 2, **caractérisée en ce que** le renvoi de chaîne (140) est mobile par rapport au pignon d'entraînement (114) le long d'une trajectoire de mouvement prédéterminée.

9. Bicyclette selon la revendication 7, **caractérisée en ce que** le renvoi de chaîne (140) est prévu sur un levier mobile (122) ou sur un agencement de levier mobile, qui est couplé avec le mouvement du triangle arrière (118) de telle sorte que le renvoi de chaîne (140) se déplace le long de sa trajectoire de mouvement prédéterminée.

10. Bicyclette selon l'une des revendications 1 à 9, **caractérisée en ce que** le triangle arrière (20; 78; 118) présente comme autre composant deux supports de chaîne (46; 84; 122) qui sont articulés sur le cadre principal (14; 76; 116), et **en ce qu'**au moins un dispositif d'amortissement (62; 102; 138) couplé au cadre principal (14; 76; 116) et au triangle arrière (20; 78; 118) amortit les mouvements du triangle arrière (20; 78; 118).

11. Bicyclette selon la revendication 10, **caractérisée en ce que** le triangle arrière (20; 78) présente, comme autre composant, deux supports de selle (50; 86) qui forment ensemble la patte d'extrémité pour la roue arrière (22; 80) et sont reliés de manière fixe avec les supports de chaîne (46; 84) à proximité de la patte d'extrémité, **en ce que** les supports de chaîne (46; 84) sont reliés de manière articulée à leurs autres extrémités respectives avec un levier (54; 90) qui, quant à lui, est monté sur le palier pivotant (58; 92) du cadre principal (14; 76), **en ce que** les supports de selle (50; 86) sont reliés de manière articulée à leurs autres extrémités respectives avec un second levier (56) ou une bascule (96), et **en ce que** le second levier (56) ou la bascule (96) sont montés sur un autre palier pivotant (60; 98) prévu sur le cadre principal (14; 76).

12. Bicyclette selon la revendication 10, **caractérisée en ce que** les supports de chaîne (122) du triangle arrière (118) sont montés directement sur le palier pivotant (124).

13. Bicyclette selon la revendication 12, **caractérisée en ce que** le triangle arrière (118) présente comme autre composant deux supports de selle (132), qui forment ensemble la patte d'extrémité (128) pour la roue arrière (120), sont reliés de manière articulée près de la patte d'extrémité (128) avec les supports de chaîne (122) et à leurs autres extrémités respectives avec le cadre principal (116) par un levier ou une bascule (134).

14. Bicyclette selon l'une des revendications précédentes, **caractérisée en ce que** le renvoi de chaîne est un pignon de chaîne (66; 104; 140).

15. Bicyclette selon l'une des revendications précédentes, **caractérisée en ce que** le cadre principal (14; 76 116) présente un élément de cadre (32) qui relie le tube de selle (26; 94, 126) avec le tube diagonal (30) du cadre principal (14; 76 116), **en ce qu'**un logement pour l'entraînement électrique (12; 72; 112) est prévu sur l'élément de cadre (32) et **en ce que** le palier pivotant (58, 60; 92, 98; 124, 136) pour le triangle arrière ( 20; 78; 118) est prévu sur l'élément de cadre (32) ou de manière directement adjacente à l'élément de cadre (32) sur le tube de selle (26; 94, 126).
